# EUROPÄISCHE PATENTSCHRIFT

(11) **EP 1 608 537 B1**
(45) Veröffentlichungstag und Bekanntmachung des Hinweises auf die Patenterteilung: **13.09.2006**
(21) Anmeldenummer: 03816504.9
(22) Anmeldetag: 30.12.2003
(51) Int. Cl.: B60R 21/04

(54) **STOSSABSORBIERENDES VERKLEIDUNGSTEIL FÜR DEN INNENRAUM VON KRAFTFAHRZEUGEN**
SHOCK-ABSORBING COVERING ELEMENT FOR THE INTERIOR OF MOTOR VEHICLES
ELEMENT DE REVETEMENT ABSORBANT DES CHOCS ET DESTINE A L'INTERIEUR DE VEHICULES

(30) Priorität: 31.03.2003 DE 10314603
(43) Veröffentlichungstag der Anmeldung: 28.12.2005
(73) Patentinhaber: Faurecia Innenraum Systeme GmbH, 76767 Hagenbach (DE)
(72) Erfinder: FRIES, Thomas, 85098 Grossmehring (DE); PRATSCH, Thomas, 93336 Pondorf (DE)
(74) Vertreter: Viering, Jentschura & Partner
(86) Internationale Anmeldenummer: PCT/EP2003/014964
(87) Internationale Veröffentlichungsnummer: WO 2004/087469

(56) Entgegenhaltungen:
- US-A- 5 154 445
- US-A- 5 806 889
- US-B1- 6 203 096
- PATENT ABSTRACTS OF JAPAN vol. 1996, no. 10, 31. Oktober 1996 (1996-10-31) -& JP 08 142784 A (TOKAI RUBBER IND LTD), 4. Juni 1996 (1996-06-04)
- PATENT ABSTRACTS OF JAPAN vol. 2000, no. 23, 10. Februar 2001 (2001-02-10) -& JP 2001 158314 A (NIPPON PLAST CO LTD), 12. Juni 2001 (2001-06-12)

## Beschreibung

Die Erfindung betrifft ein stossabsorbierendes Verkleidungsteil für den Innenraum von Kraftfahrzeugen.

Stossabsorbierende Verkleidungsteile sind nach dem Stand der Technik an Fahrzeugtüren von Kraftfahrzeugen vorgesehen. Derartige Fahrzeugtüren weisen üblicherweise ein Aussen- und ein mit diesem verbundenes Innenblech, die die Aussenseite des Bauteiles bilden, sowie eine dekorative Innenverkleidung als Abschluss zur Fahrgastseite oder dem Innenraum hin auf. Zur Verstärkung der Türen im Hinblick auf Verbesserung des Seitenaufprall-Verhaltens ist üblicherweise in etwa mittlerer Höhe ein Verstärkungsprofil an der Innenseite des Aussenbleches angeordnet. Zwischen Aussen- und Innenseite sind Funktionselemente wie zum Beispiel Fensterhebersysteme, Lautsprecher, Schlösser und bedarfsweise weitere Elemente angeordnet, die häufig auf einem eigenen Modulträger montiert sind.

Ein derartiger Verkleidungsteil ist aus den JP08142784 A gemäß der Oberbegriff des Anspruchs 1 bekannt.

Die Innenverkleidung trägt üblicherweise eine Armauflage, die aus einem starren Träger, einer darüberliegenden, relativ harten Schaumschicht, die eine angenehme Haptik bereitet, und einer zum Fahrgastraum hin gewandten, abschliessenden Dekorschicht aus Leder, Kunstleder, Textil oder Kunststoff-Folie gebildet ist. Die Armlehne ragt oft über die Fläche der Innenverkleidung in den Fahrgastraum hinein, und zwar in Höhe etwa zwischen dem Beckenrand und den unteren Rippen eines im Fahrzeug-Innenraum an der Armauflage sitzenden Insassen. Kommt es zu einem Seitenaufprall, d.h. zu einem äußeren Aufprall auf das Karosserie-Seitenteil, wird bei Seitenteilen nach dem Stand der Technik die gesamte Fahrzeugtür in Richtung auf den an der Armauflage sitzenden Fahrzeug-Insassen eingedrückt. Auch im Seitenteil angeordnete Verstärkungsprofile können das Eindrücken nicht vollständig verhindern, wenn der Aufprall ein vorbestimmtes Mass übersteigt. Hierbei besteht, auch bei einem Vorhandensein von sogenannten Sidebags, die sich aus der Innenverkleidung oder aus dem Sitz heraus entfalten können, die grosse Gefahr, dass die über die Fläche der Seitenverkleidung hervorstehende Armlehne in den genannten Bereich des Oberkörpers des Fahrzeuginsassen eingedrückt wird und erhebliche Verletzungen des Insassen verursachen kann. Dies ist festzustellen, obwohl diese Verletzungsgefahr deutlich verringert wird, wenn die Kraft, mit der die Armlehne während des Deformierens auf den Körper des Insassen drückt, den Betrag von 1.000 N nicht überschreitet, was den an Seitenteile gestellten technischen Anforderungen entspricht.

Bekannt sind Konstruktionen für verformbare Armauflagen, die z. B. aus einem Träger-Element aus Kunststoff gebildet sind und die Sollbruchstellen im Trägermaterial enthalten. Nachteilig hieran ist, dass durch das Brechen des Trägermaterials, zumal wenn es spröde ist, scharfe Kanten und Splitter entstehen können, die durch das Dekormaterial dringen können und somit zusätzliche Verletzungsgefahr darstellen. Es hat sich zudem als nachteilig erwiesen, dass das Bruchverhalten dieser Sollbruchstellen stark Temperaturabhängig ist.

Es sind weiterhin aus dem allgemeinen Stand der Technik Konstruktionen mit lammellenartig ineinanderschiebbaren Trägerteilen bekannt. Diese haben sich ebenfalls als nachteilig erwiesen, da der Träger aus einzelnen, lose ineinandergreifenden Lamellen zusammengesetzt ist, so dass er nicht die erforderliche Stabilität bietet, die von einer Trägerschicht für Armauflagen gefordert wird. Das Verbinden der Trägerschicht mit der Dekorschicht mittels eines bekannten Schaumkaschierungs-Verfahrens mit z.B. Polyurethan, welches ein preiswertes, hierfür oft verwendetes Verfahren darstellt, zeigt nicht den gewünschten Erfolg. Der Schaum würde zwar die Lamellen stabilisieren und im Verformungsfalle auch zumindst ein gewisses Maß an Energie aufnehmen. Jedoch wird diese Energie auf Grund der Elastizität des Schaums wieder abgegeben. Dabei wird eine Verringerung der Kraft auf den Fahrzeug-Insassen hierdurch nicht erreicht.

Sind die Lamellen mit Stegen als Sollbruchstellen verbunden, was die Stabilität des Trägers erhöht, ergeben sich zusätzlich die voranstehend genannten Nachteile bezüglich der Sollbruchstellen.

Konstruktionen mit senkrecht zur Verformungsrichtung gestellten offenen Waben würden eine sehr gute Energie-Absorption ermöglichen. Bei den bekannten Realisisierungen für Verkleidungsteile sind diese wünschenswerten Verformungs-Eigenschaften jedoch nicht gegeben, da im Schaumkaschierungs-Verfahren elastischer Schaum in die Waben eindringt, wodurch dergleiche Effekt wie im Falle der schaumüberdeckten Lamellen auftritt, oder Abdeck-Schichten zur Verhinderung des Eindringens von Schaum vorgesehen sind.

Aus der DE-AS 1 267 116 und der DE 41 40 706 A1 sind Armlehnen bekannt, die jedoch die aufgrund einer äußeren Kraft übertragene Energie nicht ausreichend absorbieren.

Die Erfindung stellt sich die Aufgabe, ein Verkleidungsteil für den Innenraum von Kraftfahrzeugen anzugeben, bei dem die im Falle eines nach üblichen technischen Anforderungen vorbestimmten Seitenaufpralls auf den Körper des Fahrzeuginsassen ausgeübte Kraft unter dem kritischen Wert von 1.000 N bleibt und das ein für den Insassen sicheres Verformungs-Verhalten besitzt.

Bei der Verwendung des Verkleidungsteils als Armauflage soll diese derart angeordnet werden können, dass die bei einem Seitenaufprall auf den Körper des Fahrzeug-Insassen ausgeübte Kraft im Bereich etwa zwischen dem Beckenrand und den unteren Rippen eines im Innenraum neben dem Verkleidungsteil sitzenden Insassen entsteht. Bei der Verwendung des Verkleidungsteils als Bein- oder Knieschutz soll dieses unterhalb der Armaturentafel derart angeordnet werden können, dass bei einem Aufprall eine auf die Beine ausgeübte Maximalkraft ausgeübt wird.

Das erfindungsgemässe Verkleidungsteil kann insbesondere ein Innenverkleidungsteil von Türen oder feststehenden Seitenteilen sein. Weiterhin kann das erfndungsgemässe Verkleidungsteil ein mit der Armaturentafel verbundenes oder einteilig mit diesem ausgebildetes Innenverkleidungsteil sein, das den Beinen von auf den Vordersitzen des Kraftfahrzeuges sitzenden Insassen zugewandt ist. Das Verkleidungsteil kann insbesondere auch eine Armauflage für den Innenraum eines Kraftfahrzeuges sein.

Die Aufgabe wird erfindungsgemäss durch die Merkmale des kennzeichnenden Teiles des Anspruches 1 gelöst. Weitere Ausführungsformen sind in den auf diesen rückbezogenen Unteransprüchen angegeben.

Erfindungsgemäss ist eine an der dem Innenraum zugewandten Seite eines Karosserieteils von Kraftfahrzeugen angeordnetes Verkleidungsteil, das insbesondere eine Armauflage oder ein Aufprallschutz für die Beine und Knie von Insassen sein kann, vorgesehen, das mindestens einen Verformungs-Abschnitt zur Absorption eines aufgrund eines äusseren Aufpralls auf das Karosserieteil entstandenen Energiestosses beim Übergang von einem Ausgangszustand in einen deformierten Zustand aufweist. Das Verkleidungsteil umfasst einen ersten, dem Innenraum zugewandten Grundkörper mit einem Träger-Element und einen zweiten der Aussenseite des Karosserieteils zugewandten Grundkörper mit einer Stütz-Vorrichtung. Der erste und der zweite Grundkörper sind im Normalbetrieb oder im Ausgangszustand miteinander verbunden und werden bei dem äusseren Aufprall aufeinander zu bewegt, wobei der erste Grundkörper zumindest eine Rippe mit einem freien Ende aufweist, die sich in Richtung zur Stütz-Vorrichtung erstreckt, so dass aufgrund der Relativbewegung der Grundkörper die Rippe eingedrückt wird, um den auf den Insassen wirkenden Stoß zu kompensieren. Der äussere Aufprall kann insbesondere ein Seitenaufprall sein.

Die Stütz-Vorrichtung des erfindungsgemässen Verkleidungsteils und insbesondere der Armauflage kann eine Öffnung aufweisen, durch die sich die Rippe im Ausgangszustand zum Teil hindurch erstreckt. Die Stütz-Vorrichtung kann weiterhin eine Lagerstruktur zur Lagerung der Rippe aufweisen. Auch kann die Rippe eine Sollbruchstelle oder eine Querschnittsabstufung aufweisen.

Vorteilhaft an dem erfindungsgemässen Verkleidungsteil bzw. der erfindungsgemässen Armauflage ist, dass diese aus ergonomischen Gründen auch mit hervorstehenden Konturen gestaltet sein kann und gleichzeitig den Anforderungen bezüglich der Fahrzeug-Sicherheit im Bereich eines Aufpralls gegen einen Insassen mit hervorstehenden Konturen entsprechen kann. Bei der Verwendung des erfindungsgemässen Verkleidungsteils als Armauflage kann diese derart angepasst werden, dass diese in senkrechter Richtung oder in Z-Richtung Kräfte von mindestens 1.000 N aufzunehmen vermag und auf diese Weise ihrer Funktion als Armauflage oder Armlehne nach üblichen technischen Anforderungen gerecht wird. Wird das Verkleidungsteil bzw. die Armauflage im Crashfall oder beim Seitenaufprall waagerecht oder in Y-Richtung belastet, gibt diese bereits vor dem Erreichen der von der Fahrzeug-Sicherheit als kritischer Wert benannten Kraft von maximal 1.000 N nach und schiebt sich in sich selbst zusammen. Dies wird erreicht, indem das Verkleidungsteil bzw. die Armauflage in zwei Grundkörper aufgeteilt wird, die sich im waagerechten Belastungsfall ab einer bestimmten Kraft ineinander schieben. Die Kraft, bei der dieses Ineinanderschieben beginnt, ist durch Rippen zwischen den beiden Grundkörpern einstellbar. Die Rippen können in verschiedener Weise gestaltet sein. Auch kann eine oder es können mehrere Rippen zwischen den beiden Grundkörpern vorgesehen sein.

Vorteilhaft an der Erfindung ist, dass Sollbruchstellen im Trägermaterial nicht benötigt werden, die keinen wesentlichen Beitrag zur Energieabsorption liefern und darüberhinaus noch die Gefahr bergen, dass scharfe Endteile oder Splitterteile Schaum und Dekorschicht durchtrennen und so noch ein erhöhtes Verletzungsrisiko für den Fahrzeug-Insassen darstellen.

Die Aufzehrung von Aufprallenergie wird bei dem erfindungsgemässen Verkleidungsteil bzw. der Armlehne durch Verformung der Rippe, der TrägerStruktur des ersten sowie des Träger-Elements des zweiten Grundkörpers erreicht. Besonders vorteilhaft hat sich hierbei ergeben, dass dabei keine elastischen Schaumteile durch Träger und 1 oder Dekormaterial eingeklemmt werden.

Die Erfindung wird im folgenden anhand der Zeichnung näher erläutert, wobei für Bestandteile verschiedender Ausführungsformen mit gleicher Funktion dieselben Bezugszeichen verwendet werden. Es zeigen:
- Figur 1 eine schematische Schnittdarstellung einer ersten Ausführungsform des erfindungsgemässen Verkleidungsteils in der Verwendung als Armlehne, die eine erste Ausführungsform der darin vorgesehenen Rippe aufweist,
- Figur 2 einen Schnitt entlang der Linie II-II in der Figur 1,
- Figur 3 eine schematische Schnittdarstellung einer zweiten Ausführungsform des erfindungsgemässen Verkleidungsteils in der Verwendung als Armlehne mit einer zweiten Ausführungsform der darin vorgesehenen Rippe,
- Figur 4 einen Schnitt entlang der Linie IV-IV in der Figur 3,
- Figur 5 eine schematische Schnittdarstellung einer dritten Ausführungsform des erfindungsgemässen Verkleidungsteils in der Verwendung als Armlehne mit einer dritten Ausführungsform der darin vorgesehenen Rippe,
- Figur 6 einen Schnitt entlang der Linie VI-VI in der Figur 5.

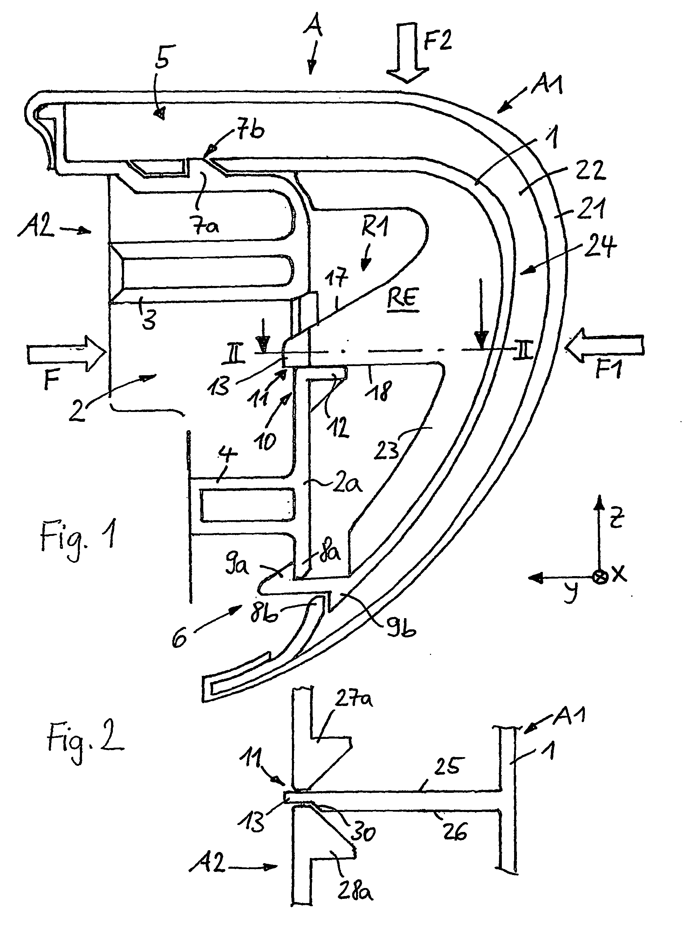

Das erfindungsgemässe Verkleidungsteils ist für die dem Innenraum IR des Fahrzeugs zugewandte Innenseite eines Karosserie- oder Verkleidungsteils vorgesehen, wobei das Karosserie- oder Verkleidungsteil zu einer Kraftfahrzeug-Tür oder zu einem anderen Seitenteil eines Kraftfahrzeugs gehören kann. Das erfindungsgemässe Verkleidungsteil und insbesondere die in der Figur 1 dargestellte Ausführungsform desselben in der Verwendung als Armlehne oder Armauflage A weist einen ersten Grundkörper A1 und einen zweiten Grundkörper A2 auf. Der erste Grundkörper A1 ist dem Innenraum IR zugewandt, während der zweite Grundkörper A2 der der Außenseite zugewandte Teil der Armauflage A ist. Der zweite Grundkörper A2 kann mit Stütz-Elementen (nicht dargestellt) des Karosserie- oder Verkleidungsteils eines Kraftfahrzeugs verbunden oder Bestandteil derselben sein.

In der Verwendung des Verkleidungsteils als Teil einer Armaturentafel kann das Verkleidungsteil einteilig mit demselben oder als eigenes und mit der Armaturentafel verbundenes Bauteil ausgebildet sein. Analog kann bei diesen Ausführungsformen der zweite Grundkörper A2 mit Stütz-Elementen der Armaturentafel verbunden sein.

Die im folgenden beschriebenen Ausführungsformen des erfindungsgemässen Verkleidungsteils beziehen sich auf eine Gestaltung desselben als Armauflage A. Die dabei beschriebenen Gestaltungsmerkmale können auf andere Verwendungsformen des erfindungsgemässen Verkleidungsteils analog übertragen werden.

Zur Orientierung ist in den Figuren 1, 3 und 5 ein Fahrzeug-bezogenes XYZ-Koordinationsystem eingetragen mit einer in der vorgesehenen Fahrtrichtung verlaufenden Fahrzeug-Längsrichtung X, einer Quer- oder Breiten-Richtung Y und einer in Bezug auf das Fahrzeug nach oben verlaufenden vertikalen oder Höhen-Richtung oder Fahrzeug-Hochachse Z. Die Richtung Y gibt in etwa die Richtung an, in der in etwa auch eine erfindungsgemäß angenommene äussere Aufprall-Kraft sowie die Reaktionskraft F1 eines neben der Armauflage A sitzenden Insassen des Fahrzeuges auf die Armauflage A wirken kann. Die angenommene Aufprall-Kraft kann auch in einem bestimmten Winkelbereich wirken, der sich ausgehend von der horizontalen Richtung Y in beide vertikalen Richtungen öffnet. Diese Aufprall-Kraft ergibt sich wie folgt: Im Fall eines Seiten-Aufpralls wird die im Fahrzeug neben der Armauflage A sitzende Peson gegen die Türseiten-Verkleidung geschleudert, während die von der Seite auf das Fahrzeug einwirkende Barriere bereits das Türblech in Richtung zur Fahrzeugmitte verdrängt hat. Durch diesen Sachverhalt kann die Türverkleidung nicht mehr nach außen nachgeben und es kommt zu einem harten Aufprall der Person auf die Türverkleidung. Aufgrund eines derartigen Energiesstosses bewegen sich der erste Grundkörper A1 und der zweite Grundkörper A2 aufeinander zu.

Der erste Grundköper A1 umfaßt ein Träger-Element oder eine Trägerstruktur 1, das in der Gestaltung des erfindungsgemässen Verkleidungsteils als Armauflage als Armlehnenträger gebildet ist. Diese (Armlehnen-)Trägerstruktur 1 ist ein vom Innenraum IR aus gesehen konkav gekrümmtes Gebilde, das zumindest eine Rippe R1 umfasst. Vorzugsweise hat der Armlehnenträger 1 aus Sicht des Insassen eine Form, die nach ergonomischen Gesichtspunkten zur Ablage oder zum Abstützen des Armes eines Insassen während der Fahrt geeignet ist. Dies kann jedoch auch durch ein weiteres auf der Trägerstruktur bzw. dem Armlehnenträger 1 angeordnetes Struktur-Element bewirkt werden. Auf der Trägerstruktur bzw. dem Armlehnenträger 1 kann eine Deckfolie 21 aufgebracht sein. Zwischen der Deckfolie 21 und der Trägerstruktur 1 kann eine Zwischenschicht 22 z.B. aus Schaumstoff angeordnet sein.

Der zweite Grundkörper A2 weist eine mit der der Trägerstruktur 1 zusammenwirkende Stütz-Vorrichtung oder ein Stütz-Element 2 auf, die bzw. das in einer bevorzugten Ausführungsform einen Stütz-Träger 2a aufweisen kann. Weiterhin kann die Stütz-Vorrichtung oder das Stütz-Element 2 eine erste und eine zweite Stützrippen-Anordnung 3 bzw. 4 aufweisen, um die armlehnenseitige Stütz-Vorrichtung 2 mit dem Karosserie- oder Verkleidungsteil des Kraftfahrzeugs zu verbinden. Die Stütz-Vorrichtung 2 ist über zwei Verbindungen 5, 6 mit der der Trägerstruktur bzw. dem Armlehnenträger 1 verbunden, die in den dargestellten Ausführungsformen als Clip-Verbindungen gestaltet sind. Die erste Verbindung 5 umfasst ein an der Stütz-Vorrichtung 2 vorgesehenes Anschlusselement 7a zur Aufnahme eines entsprechenden Gegenstücks 7b dem Armlehnenträger 1. In der in den Figuren 1 und 2 dargestellten Ausführungsform ist das Anschlusselement 7a als Anhebung ausgebildet, die formschlüssig mit einer Öffnung 7b in der Armlehnen-Trägerstruktur 1 zusammenwirkt. Die weitere Verbindung 6 ist aus zwei freien Enden 8a, 8b der Stütz-Vorrichtung 2 gebildet, die mit einander zugewandten Einrast-Ecken 9a bzw. 9b des Armlehnenträgers 1 zusammenwirken. Die zwei freien Enden 8a, 8b der Stütz-Vorrichtung 2 können auch Kanten einer Öffnung in der Stütz-Vorrichtung 2 sein. Der erste Grundkörper A1 kann mit dem zweiten Grundkörper A2 auch nur mittels einer Verbindung oder mittels mehr als zwei Verbindungen verbunden sein. Auch können neben oder anstelle der Clip-Verbindung auch andere Verbindungsarten verwendet werden.

Die Rippe R1 kann einteilig mit dem Armlehnenträger 1 oder als eigenes Teil gestaltet sein, das mit der der Trägerstruktur bzw. dem Armlehnenträger 1 verbunden ist. Die Rippe R1 ist vorzugsweise einteilig mit einer Versteifungsrippe 23 des Armlehnenträgers 1 gebildet. Die Rippe R1 ist auf derjenigen Seite der der Trägerstruktur bzw. des Armlehnenträgers 1 gelegen, die dem Innenraum IR abgewandt und dem Seiten- oder Karosserieteil zugewandt ist, und ist ein von der der Trägerstruktur bzw. dem Armlehnenträger 1 in Richtung zur Fahrzeug-Außenseite oder zur Stütz-Vorrichtung 2 wegragendes Gebilde mit einem freien Ende 13. Die Mittelebene RE der Rippe R1 erstreckt sich vorzugsweise in oder in etwa in der YZ-Ebene, in der sich also auch die Richtung der angenommenen Kraft F1 bzw. eine zu kompensierende äußere Seitenkraft F liegt. Vorzugsweise laufen die in Bezug auf die Mittelebene RE vorhandenen Randlinien 17, 18 oder Aussenseiten winklig oder keilförmig in Richtung zum freien Ende 13 zusammen.

Die Stütz-Vorrichtung oder das Stütz-Element 2 und eine Lager-oder Aufnahmestruktur 10 zur Aufnahme des freien Endes 13 der Rippe R1. In der Ausführungsform nach den Figuren 1 und 2 weist die Lagerstruktur 10 eine Öffnung 11 zur Aufnahme eines Teils der Rippe R1 sowie ein in der Rippen-Ebene RE wirkendes Auflager 12 auf. Alternativ kann die Stütz-Vorrichtung 2 ein einzelnes Trägerelement sein. Auch kann die Stütz-Vorrichtung 2 Bestandteil des Karosserie-Seitenteils sein.

Alternativ kann das freie Ende 13 der Rippe R1 auch zwischen der Trägerstruktur bzw. dem Armlehnen-Träger 1 und der Stütz-Vorrichtung 2 angeordnet sein, ohne von der Stütz-Vorrichtung 2 gelagert zu werden.

Die Rippe R1 kann an seinen quer zur Mittelebene RE verlaufenden Rippen-Aussenseiten 25, 26 gelagert sein von jeweils einer Kante oder Anlagefläche 27 bzw. 28 des Träger-Elementes 2. Die Stütz-Vorrichtung 2 kann im Bereich der Kante oder Anlagefläche 27, 28 verstärkt sein und beispielsweise im Querschnitt die Form einer hakenförmigen Verstärkung oder Klinke 27a, 28a aufweisen.

Zumindest eine (Bezugszeichen 26) der Rippen-Aussenseiten kann mit einer Abstufung 30 versehen sein, die entlang der jeweiligen Kante oder Anlagefläche 27 bzw. 28 der Stütz-Vorrichtung 2 oder der Rippen-Öffnung 11 verläuft und mit dieser zusammenwirkt. Die Abstufung 30 liegt dabei an der Kante oder Anlagefläche 27 bzw. 28 an, so dass die Rippen-Öffnung 11 einen Widerstand erzeugt, wenn die Rippe R1 aufgrund der Gegenkraft F1 auf eine äußere Seitenkraft F weiter in die Öffnung 11 gedrückt wird.

Die Funktionsweise der erfindungsgemässen Armlehne A ist wie folgt: im normalen Betrieb, d.h. ohne dem Auftreten einer erheblichen äusseren Kraft F und einer entsprechenden Gegenkraft F1 ist die Armlehne A auf einem Auflager 12 des Träger-Elements 2 gelagert. Dadurch übernimmt die Rippe R1 auch zu einem bestimmten Teil eine Abstützfunktion in der normalen Konstellation.

Trifft im Falle der Türverformung infolge eines gemäss üblichen technischen Anforderungen vorbestimmten, seitlichen äusseren Aufpralls auf das Fahrzeug die Armauflage A auf den Körper eines neben der Armauflage A sitzenden Fahrzeuginsassen, bewirkt dieser eine entsprechende Reaktionskraft F1 auf die Armauflage A. Dadurch wird eine Deformation oder Verkürzung der Armlehne mit einer bleibenden, gezielten Verformung der Rippe R1 erzeugt und auf diese Weise Aufprallenergie verzehrt, wobei die Kraft auf den neben der Armauflage A sitzenden Fahrzeuginsassen 1.000 N nicht übersteigt.

Im Falle des Auftretens der äusseren Kraft F wird aufgrund einer von einem Fahrzeug-Insassen hervorgerufenen Gegenkraft F1 eine Verformung des Armlehnenträgers 1 bewirkt. Übersteigt die Gegenkraft F1 eine vorbestimmte Grösse, wird ein entsprechender Abschnitt 24 der Trägerstruktur bzw. des Armlehnenträgers 1 deformiert und in Richtung zur Stütz-Vorrichtung 2 oder in Richtung der Kraft F1 bzw. in Y-Richtung gedrückt. Durch die Annäherung des Abschnitts 24 und der Stütz-Vorrichtung 2 wird die Rippe R1 an die Stütz-Vorrichtung 2 und - bei Vorhandensein einer Rippen-Öffnung 11 - durch dieselbe gedrückt und durch deren Deformation Stoßenergie absorbiert.

Bei Vorhandensein einer Rippen-Öffnung 11 wird die Rippe R1 durch diese Öffnung 11 gedrückt. Ist eine Abstufung 30 in der Rippe R1 vorgesehen, bewirkt diese einen Widerstand gegen die Kanten 27, 28 der Rippen-Öffnung 11 beim Durchdrücken der Rippe R1. In jedem Fall bewirkt die Bewegung der Rippe R1 weiter in die Rippen-Öffnung hinein, dass die Stosskraft F1 in die Stütz-Vorrichtung 2 abgeleitet wird. Die Kraft F1 wird im Bereich des quer zur Erstreckung der Rippe R1 verlaufenden Stütz-Vorrichtung 2 in Komponenten aufgeteilt, die in dessen Längsrichtung und entgegengesetzt zueinander verlaufen. Aufgrund dieser Kraftaufteilungen kommt es zur Verformung der Stütz-Vorrichtung 2, wobei die Rippen-Lagerstruktur 10 und ein mit dieser verbundener Stütz-Träger 2a zerstört wird. Die dadurch aufgenommenen Kräfte bewirken beim Auftreten der äusseren Kraft F eine teilweise Kompensation der auf einen Insassen wirkenden Reaktionskraft F1, ohne dass die Gefahr besteht, dass der Insasse durch Zersplitterung von Bestandteilen der Armlehne A verletzt wird. Die erfindungsgemässe Armlehne A kann aufgrund üblicher Anforderungen derart ausgelegt werden, dass bei dem Auftreten einer vorbestimmten äusseren Kraft F die auf einen Insassen wirkende Reaktionskraft vorzugsweise unterhalb 1.000 N liegt.

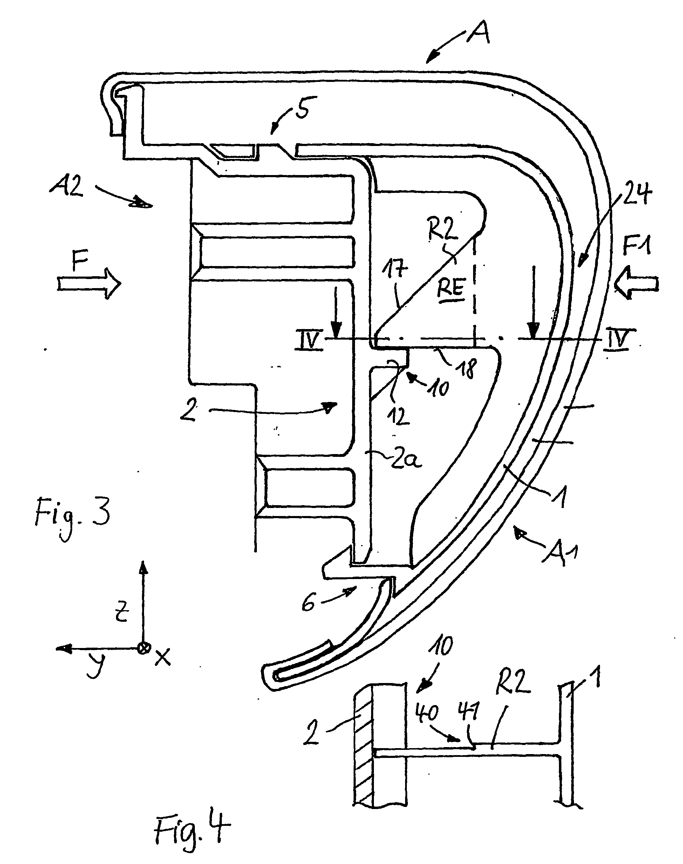

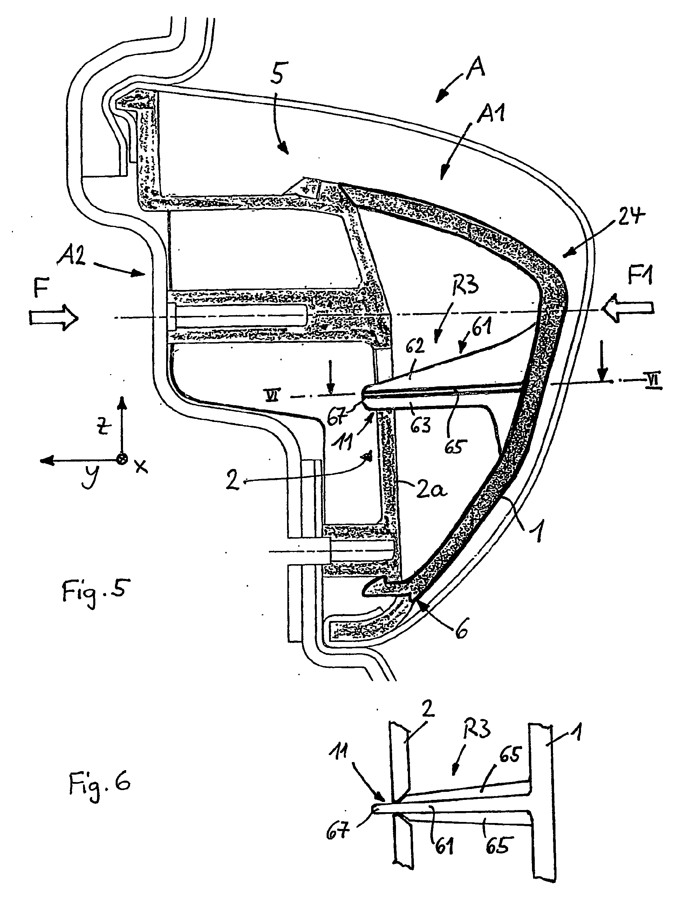

Bei der Ausführungsform nach den Figuren 3 und 4 ist die Stütz-Vorrichtung 2 im Bereich der Rippen-Lagerstruktur 10 durchgängig ausgebildet, d.h. es ist keine Rippen-Öffnung (Bezugszeichen 11 in der Figur 1) vorgesehen. Die Rippen-Lagerstruktur 10 kann ein Auflager 12 aufweisen, auf dem zumindest eine Kantenlinie der Rippe R2 gelagert ist. Alternativ kann das Auflager 12 auch entfallen.

Die Rippe R2 kann eine Sollbruchstelle 40 aufweisen. Diese ist in der Ausführungsform nach den Figuren 3 und 4 als eine Abstufung 41 in Bezug auf den Querschnitt oder stufenweise Querschnittsvergrößerung in Richtung zum Rippenansatz oder zum Armlehnenträger 1 gestaltet.

Die Funktionsweise der erfindungsgemässen Armlehne A im normalen Betrieb liegt im wesentlichen in der Abstützfunktion, die - beim Vorhandensein eines Auflagers 12 - zum Teil auch durch das Zusammenwirken der Rippe R1 mit dem Auflager 12 ausgeübt wird. Im Falle des Auftretens einer äusseren Kraft F ab einer vorbestimmten Grösse bewirkt eine entsprechende Reaktionskraft F1 eine Deformation des Abschnitts 24 der Armlehnen-Trägerstruktur 20 in Richtung zum Träger-Element 5. Dadurch wird die Rippe R2 gegen das Träger-Element 2 gedrückt und gestaucht. Die Stauchung oder Deformation der Rippe R2 wird gegebenenfalls durch die Sollbruchstelle 40 unterstützt. Die durch die Deformation der Rippe R2 aufgenommenen Kräfte bewirken beim Auftreten einer entsprechenden äusseren Kraft F eine teilweise Kompensation und Begrenzung der von einem Insassen ausgeübten Reaktionskraft F1, ohne dass die Gefahr besteht, dass der Insasse durch Zersplitterung von Bestandteilen der Armauflage A verletzt wird.

Bei der Ausführungsform nach den Figuren 5 und 6 ist eine an der Trägerstruktur bzw. dem Armlehnenträger 1 befestigte Rippe R3 angeordnet, die einen in Richtung zur Aussenseite oder in Y-Richtung ausgerichteten Grundkörper 61 mit zwei Seitenteilen 62, 63 sowie eine Versteifungsrippe 65 aufweist. Die Versteifungsrippen 65 können in einer alternativen Ausführungsform der Rippe R3 auch entfallen. Die Seitenteile 62, 63 sind auf jeweils gegenüberliegenden Seiten der Versteifungsrippe 65 angeordnet, wobei die Außenkonturen der Seitenteile 62, 63 von dem Armlehnenträger 1 aus zu der Stütz-Vorrichtung 2 hin winklig zusammenlaufen. Dadurch ergibt sich im wesentlichen eine Keilform für die Rippe R3. Dabei muß die Rippe R3 an seinem freien Ende 67 nicht spitz zusammenlaufen. Die Richtung, in denen sich die Seitenteile 62, 63 der Versteifungsrippe 65 aus erstrecken, hängt vom Anwendungsfall ab. In der dargestellten Ausführungsform erstrecken sich die Seitenteile 62, 63 in Z-Richtung.

Der Rippen-Grundkörper 61 ragt mit seinem freien Ende 67 durch eine Öffnung 11. In der dargestellten Ausführungsform kann ein Teil des freien Endes 67 der Rippe R3 in der Öffnung 11 der Stütz-Vorrichtung gelagert sein. Alternativ kann diese Lagerfunktion auch entfallen. In der dargestellten Ausführungsform durchragt der Grundkörper 61 die Öffnung, während sich die Enden der Seitenteile 62, 63 zum Zwecke der Lagerung der Rippe R3 teilweise an Anlageflächen der Öffnung anliegen.

Die Funktionsweise der efindurigsgemässen Armlehne A im Falle des Auftretens einer äusseren Kraft F liegt in der Kompensation dadurch hervorgerufener Gegenkräfte F1. Aufgrund der dabei entstehenden Deformation des Abschnitts 24 des Armlehnen-Trägers 1 in Richtung zur Stütz-Vorrichtung 2 wird die Rippe R3 gegen die Stütz-Vorrichtung 2 bzw. den Stütz-Träger 2a und weiter durch die Öffnung 11 gedrückt und gestaucht. Ein Teil der dabei entstehenden Kräfte wird in die Stütz-Vorrichtung 2 geleitet. Die durch die Deformation der Rippe R3 aufgenommenen Kräfte bewirken eine teilweise Kompensation und Begrenzung der auf einen Insassen wirkenden Reaktionskraft F1, ohne dass die Gefahr besteht, dass der Insasse durch Zersplitterung von Bestandteilen der Armlehne A verletzt wird.

Im Falle entsprechender Aufprallkräfte und eines darauffolgenden Eintauchens der Rippe R3 in die Stütz-Vorrichtung übt diese in der Ausführungsform mit Versteifungsrippen 65 nicht nur eine Kraft in Z-Richtung, sondern auch eine Kraft in X-Richtung auf die Stützvorrichtung bzw. den Stütz-Träger 2a aus. Dadurch wird die Energie-Absorption optimiert.

Alternativ kann die Rippe R3 auch vor der Stütz-Vorrichtung 2 angeordnet sein, wie es in der Ausführungsform der Figuren 3 und 4 vorgesehen ist, d.h. es ist keine Öffnung in der Stütz-Vorrichtung 2 vorgesehen, durch die die Rippe R3 die Stütz-Vorrichtung 2 teilweise durchragt.

Erfindungsgemäss sind die in den Figuren 1 bis 6 dargestellten Rippen R1, R2, R3 und die beschriebenen Varianten derselben auf auf jede der dargestellten Armlehnen sowie mit oder ohne Öffnung 11 anwendbar. D.h. die Rippe R1, R2 oder R3 kann mit oder ohne Abstufung sowie mit oder ohne Sollbruchstelle aufweisen. Außerdem kann jede der Rippen R1, R2, R3 an einer Stütz-Vorrichtung 2 gelagert sein.

Aus den Figuren 1 bis 3 und insbesondere aus der Figur 1 ist ersichtlich, das die erfindungsgemäße stossabsorbierende Verkleidungsteil nicht an einer Kraftfahrzeugtür vorgesehen sein muß, sondern an der Innenseite eines beliebigen Karosserieteils angeordnet sein kann, um eine gegebenfalls auftretende Aufprallenergie aufzubrauchen oder zu verzehren. Das stossabsorbierende Verkleidungsteil kann auch zum Schutz von Transportgütern verwendet werden.

In einer weiteren Ausführungsform der erfindungsgemässen Verkleidungsteils kann dieses als Teil einer Armturen- oder Instrumententafel eines Kraftfahrzeuges verwendet werden. Der erste Grundkörper ist bei diesem Anwendungsfall ebenfalls den auf den Vordersitzen des Kraftfahrzeuges sitzenden Insassen zugewandt. Ein solches Verkleidungsteil kann insbesondere derart im Innenraum IR angeordnet sein, dass die Energie-Absorption erreicht wird, wenn das Verkleidungsteil an den Beinen und insbesondere den Knien der Insassen auftrifft.

## Patentansprüche

1. Dem Innenraum (IR) von Kraftfahrzeugen zugewandtes Verkleidungsteil (A) mit mindestens einem Verformungs-Abschnitt (24) zur Absorption eines aufgrund eines äusseren Aufpralls (Kraft F) auf das Karosserieteil entstandenen Energiestosses beim Übergang von einem Ausgangszustand in einen deformierten Zustand,
**dadurch gekennzeichnet,**
- **dass** das Verkleidungsteil (A) einen ersten, dem Innenraum IR zugewandten Grundkörper (A1) mit einem Trägerelement (1) und einen zweiten der Aussenseite des Karosserieteils zugewandten Grundkörper (A2) mit einer Stütz-Vorrichtung (2) umfasst, die im Ausgangszustand miteinander verbunden sind und die bei dem äusseren Aufprall aufeinander zu bewegt werden,
- **dass** der erste Grundkörper (A1) zumindest eine Rippe (R1, R2, R3) mit einem freien Ende (13) aufweist, die sich in Richtung zur Stütz-Vorrichtung (2) erstreckt, so dass aufgrund der im Falle eines äusseren Aufpralls (Kraft F) auftretenden Relativbewegung der Grundkörper (A1, A2) die Rippe eingedrückt wird, um den auf den Insassen wirkenden Stoß zu kompensieren, und
- **dass** die Stütz-Vorrichtung (2) eine Öffnung (11) aufweist, durch die sich die Rippe (R1, R2, R3) im Ausgangszustand zum Teil hindurch erstreckt.

2. Dem Innenraum (IR) von Kraftfahrzeugen zugewandtes Verkleidungsteil (A) mit mindestens einem Verformungs-Abschnitt (24) nach Anspruch 1, **dadurch gekennzeichnet, dass** die Stütz-Vorrichtung (2) eine Lagerstruktur (10) zur Lagerung der Rippe (R1, R2, R3) aufweist.

3. Dem Innenraum (IR) von Kraftfahrzeugen zugewandtes Verkleidungsteil (A) mit mindestens einem Verformungs-Abschnitt (24) nach einem der voranstehenden Ansprüche, **dadurch gekennzeichnet, dass** die Rippe (R1, R2, R3) eine Sollbruchstelle (30, 40) aufweist.

4. Dem Innenraum (IR) von Kraftfahrzeugen zugewandtes Verkleidungsteil (A) mit mindestens einem Verformungs-Abschnitt (24) nach einem der voranstehenden Ansprüche, **dadurch gekennzeichnet, dass** die Rippe (R1, R2, R3) die im Ausgangszustand am Öffnungsrand der Öffnung (11) anliegt eine Querschnittsabstufung (41) aufweist.

5. Dem Innenraum (IR) von Kraftfahrzeugen zugewandtes Verkleidungsteil (A) mit mindestens einem Verformungs-Abschnitt (24) nach einem der voranstehenden Ansprüche, **dadurch gekennzeichnet, dass** die Rippe (R3) einen in Richtung zur Karosserie-Aussenseite ausgerichteten Grundkörper (61) und zwei auf jeweils gegenüberliegenden Seiten des Grundkörpers (61) angeordnete Seitenteile (62, 63) aufweist, deren Außenkonturen zu der Stütz-Vorrichtung (2) hin winklig zusammenlaufen.

6. Dem Innenraum (IR) von Kraftfahrzeugen zugewandtes Verkteidungsteil (A) mit mindestens einem Verformungs-Abschnitt (24) nach dem Anspruch 5, **dadurch gekennzeichnet, dass** der Grundkörper (61) zusätzlich eine Versteifungsrippe (65) aufweist.

7. Dem Innenraum (IR) von Kraftfahrzeugen zugewandtes Verkleidungsteil (A) mit mindestens einem Verformungs-Abschnitt (24) nach einem der voranstehenden Ansprüche, **dadurch gekennzeichnet, dass** das Verkleidungsteil eine Armauflage (A) ist.

8. Dem Innenraum (IR) von Kraftfahrzeugen zugewandtes Verkleidungsteil (A) mit mindestens einem Verformungs-Abschnitt (24) nach einem der Ansprüche 1 bis 6, **dadurch gekennzeichnet, dass** das Verkleidungsteil ein mit einer Armaturentafel verbundenes Verkleidungsteil ist, das derart angeordnet ist, dass bei einem entsprechenen Aufprall eine Energieabsorption gegenüber den Beinen der Insassen auftritt.

## Claims

1. A lining element (A) on the side facing the vehicle interior (IR) with at least one deformation member (24) for absorption of impact energy in the case of an external impact (force F) on a vehicle body part during the transition from a first state to a deformed state
**characterized in that**
- the lining element (A) comprises a first base body (A1) with a carrier element (1) facing the vehicle interior and a second base body (A2) with a support device (2) facing the outside part of the vehicle body part, the base bodies being connected to each other in the first state and being moved towards each other in the case of an external impact,
- the first base body (A1) comprises at least one rip (R1, R2, R3) with an exposed end (13) extending towards the support device (2), so that in the case of an external impact (force F) causing a relative motion of the base bodies (A1, A2) the rip is being deformed absorbing the impact exerted on the passenger, and
- the support device (2) comprising an opening (11) through which the rip (R1, R2, R3) is partly extending in the first state.

2. A lining element (A) on the side facing the vehicle interior (IR) with at least one deformation member (24) according to claim 1, **characterized in that** the support device (2) comprises a support structure (10) for supporting the rip (R1, R2, R3).

3. A lining element (A) on the side facing the vehicle interior (IR) with at least one deformation member (24) according to one of the preceding claims, **characterized in that** the rip (R1, R2, R3) comprises a predetermined breaking point (30, 40).

4. A lining element (A) on the side facing the vehicle interior (IR) with at least one deformation member (24) according to one of the preceding claims, **characterized in that** the rip (R1, R2, R3) resting against the border of the opening (11) comprises a cross sectional grading (41).

5. A lining element (A) on the side facing the vehicle interior (IR) with at least one deformation member (24) according to one of the preceding claims **characterized in that** the rip (R3) comprises a base part (61) extending in the direction to the outside part of the vehicle body part and two side parts (62, 63) being disposed each on the two opposing sides of the base part (61), the outer contour of which converge in an angle to the support device (2).

6. A lining element (A) on the side facing the vehicle interior (IR) with at least one deformation member (24) according to claim 5, **characterized in that** the base part (61) additionally comprises a stiffening rip (65).

7. A lining element (A) on the side facing the vehicle interior (IR) with at least one deformation member (24) according to one of the preceding claims, **characterized in that** the lining element is a arm support (A).

8. A lining element (A) on the side facing the vehicle interior (IR) with at least one deformation member (24) according to one of the preceding claims 1 to 6, **characterized in that** the lining element is a lining element being connected to an instrument panel which is disposed in a way that in the case of an external impact an absorption of energy occurs with regard to the legs of a passenger.

## Revendications

1. Elément d'habillage (A) tourné vers l'espace intérieur (IR) de véhicules automobiles, comportant au moins une section de déformation (24) destinée à absorber un choc porteur d'énergie engendré par suite d'un impact extérieur (force F) sur l'élément de carrosserie, lors du passage d'un état d'origine dans un état déformé,
**caractérisé**
- **en ce que** l'élément d'habillage (A) comprend un premier corps de base (A1) tourné vers l'espace intérieur IR et comportant un organe de support (1), ainsi qu'un deuxième corps de base (A2) tourné vers la face extérieure de l'élément de carrosserie et comportant un dispositif de soutien (2), lesquels corps de base sont reliés l'un à l'autre dans l'état d'origine et sont déplacés l'un vers l'autre lors de l'impact extérieur,
- **en ce que** le premier corps de base (A1) présente au moins une nervure (R1, R2, R3) ayant une extrémité libre (13), nervure qui s'étend en direction du dispositif de soutien (2), de telle sorte que par suite du déplacement relatif des corps de base (A1, A2) survenant dans le cas d'un impact extérieur (force F), la nervure soit enfoncée, pour compenser le choc s'exerçant sur les occupants, et
- **en ce que** le dispositif de soutien (2) présente une ouverture (11), à travers laquelle la nervure (R1, R2, R3) s'étend en partie dans l'état d'origine.

2. Elément d'habillage (A) tourné vers l'espace intérieur (IR) de véhicules automobiles, comportant au moins une section de déformation (24), selon la revendication 1, **caractérisé en ce que** le dispositif de soutien (2) présente une structure d'appui (10) pour le maintien en appui de la nervure (R1, R2, R3).

3. Elément d'habillage (A) tourné vers l'espace intérieur (IR) de véhicules automobiles, comportant au moins une section de déformation (24), selon l'une des revendications précédentes, **caractérisé en ce que** la nervure (R1, R2, R3) présente un point destiné à la rupture (30, 40).

4. Elément d'habillage (A) tourné vers l'espace intérieur (IR) de véhicules automobiles, comportant au moins une section de déformation (24), selon l'une des revendications précédentes, **caractérisé en ce que** la nervure (R1, R2, R3), qui porte contre le bord de l'ouverture (11) dans l'état d'origine, présente un gradin (41) en section transversale.

5. Elément d'habillage (A) tourné vers l'espace intérieur (IR) de véhicules automobiles, comportant au moins une section de déformation (24), selon l'une des revendications précédentes, **caractérisé en ce que** la nervure (R3) présente un corps de base (61) orienté en direction de la face extérieure de la carrosserie et deux éléments latéraux (62, 63) disposés sur des côtés respectivement opposés du corps de base (61), éléments latéraux dont les contours extérieurs convergent sous une forme anguleuse vers le dispositif de soutien (2).

6. Elément d'habillage (A) tourné vers l'espace intérieur (IR) de véhicules automobiles, comportant au moins une section de déformation (24), selon la revendication 5, **caractérisé en ce que** le corps de base (61) présente en plus une nervure de rigidification (65).

7. Elément d'habillage (A) tourné vers l'espace intérieur (IR) de véhicules automobiles, comportant au moins une section de déformation (24), selon l'une des revendications précédentes, **caractérisé en ce que** l'élément d'habillage est un repose-bras (A).

8. Elément d'habillage (A) tourné vers l'espace intérieur (IR) de véhicules automobiles, comportant au moins une section de déformation (24), selon l'une des revendications 1 à 6, **caractérisé en ce que** l'élément d'habillage est un élément d'habillage relié à un tableau de bord et qui est disposé de telle façon que, lors d'un impact correspondant, une absorption d'énergie par rapport aux jambes des occupants se produise.
